Europäisches Patentamt

**European Patent Office**

**Office européen des brevets**

(11) Numéro de publication: **0 109 882**
**B1**

(12) **FASCICULE DE BREVET EUROPEEN**

(45) Date de publication du fascicule du brevet: **15.07.87**

(51) Int. Cl.⁴: **A 01 B 61/04**

(21) Numéro de dépôt: **83402131.3**

(22) Date de dépôt: **02.11.83**

(54) **Sécurité hydraulique pour charrues.**

(30) Priorité: **17.11.82 FR 8219219**

(43) Date de publication de la demande:
**30.05.84 Bulletin 84/22**

(45) Mention de la délivrance du brevet:
**15.07.87 Bulletin 87/29**

(84) Etats contractants désignés:
**AT BE CH DE GB IT LI NL SE**

(56) Documents cités:
**DE - A - 1 908 381**
**DE - B - 1 298 343**
**FR - A - 2 389 311**
**US - A - 3 032 122**
**US - A - 3 561 541**

(73) Titulaire: **Société de Constructions Mécaniques HUARD-UCF Société Anonyme, rue des Vauzelles, F-44110 Châteaubriant (FR)**

(72) Inventeur: **Brun, Yves, La Ferrière Routes de Nantes, F-44110 Chateaubriant (FR)**
Inventeur: **Porel, Louis Claude, Rue de Moulins Jeanmenil, F-88700 Rambervillers (FR)**

(74) Mandataire: **Loyer, Bertrand et al, Cabinet Pierre Loyer 18, rue de Mogador, F-75009 Paris (FR)**

ACTORUM AG

## Description

La présente invention concerne les charrues du type dit «non-stop», c'est-à-dire munies d'un dispositif de sécurité qui permet à un soc heurtant un obstacle de pivoter vers le haut à l'encontre d'un système élastique qui le ramène en position après le passage de l'obstacle.

Il est connu, en particulier par le brevet français PUECH n° 505 420 du 29 septembre 1919 de réaliser le châssis de la charrue en deux parties, une première partie horizontale solidaire de l'avant-train tracteur et une deuxième partie de T, la branche supérieure du T portant à ses ectrémités les deux socs à versoirs gauche et droite, les deux parties étant munies chacune d'un plateau et ces deux plateaux étant pressés l'un contre l'autre par un moyen élastique de sorte que lorsque le soc qui est en position de travail, dans la terre, heurte un obstacle, la partie en T bascule vers le haut, le plateau porté par l'extrémité de cette partie en T pivotant en prenant appui par sa partie haute contre le plateau porté par la première partie.

Dans le brevet FR-A 2 310 690 du 14 mai 1975, au nom du demandeur, on a décrit un perfectionnement à ce type de dispositif de sécurité pour charrues selon lequel les deux plateaux sont maintenus accolés l'un contre l'autre par l'intermédiaire d'une bielle de traction articulée au centre du premier plateau, située à l'intérieur de la barre verticale du T et agissant par traction sur un ressort prenant appui contre la barre horizontale du T au point de jonction des deux barres du T; ce ressort étant constitué par un cylindre attelé à la bielle de traction, le piston étant solidaire du bâti de la charrue.

Selon ledit brevet 2 310 690, le mouvement relatif du cylindre par rapport au piston comprime un volume de gaz déjà précomprimé. Selon une variante de réalisation, le cylindre est solidaire du bâti de la charrue et le piston est attelé à la bielle de traction, le mouvement relatif du piston par rapport au cylindre refoulant un liquide hydraulique vers un accumulateur hydraulique. Cette disposition permet d'employer un seul accumulateur hydraulique pour plusieurs couples de socs, dans le cas d'une charrue multi-socs réversibles.

Tous ces dispositifs présentent l'inconvénient que la force de rappel tendant à ramener la partie mobile de la charrue à sa position d'origine augmente au fur et à mesure que l'angle de basculement grandit. En cas d'obstacle important provoquant un grand basculement du timon en T portant le couple de socs, cela peut entraîner une rupture des pièces ou un arrachement d'une pierre ainsi malencontreusement amenée en surface. Pour éviter cela, il faudrait tarer le système élastique de façon qu'il ait une résistance assez faible au début du mouvement, mais alors la force maintenant les deux plateaux accolés l'un contre l'autre est insuffisante en cas de labour en terrain dur et sec et il se produit un effet de piochage indésirable.

Pour pallier cet inconvénient, on a disposé des systèmes à ressorts mécaniques actionnés par des jeux de leviers agencés de façon que la compression du ressort diminue au fur et à mesure que l'angle de déviation du timon en T augmente. Ces systèmes sont théoriquement parfaitement satisfaisants, mais sont dans la pratique fragiles parce que leur fonctionnement peut être déréglé par la présence de terre ou de rouille, ce qui arrive souvent avec une charrue. De plus, le nombre d'articulations nécessaires affecte rapidement les performances dès qu'un début d'usure intervient.

La présente invention concerne plus particulièrement les charrues munies d'un dispositif de sécurité oléopneumatique. On a déjà pensé à disposer sur la canalisation reliant le cylindre, porté par le timon en T de la charrue, à l'accumulateur oléo-pneumatique un simple clapet de surpression à tarage réglable. De tels dispositifs sont décrits par exemple dans le brevet allemand DE-B 1 298 343 et dans la demando de brevet français FR-A 2 389 311. On obtient ainsi un effet de seuil: selon le tarage du clapet de surpression, il faut une pression ayant une valeur prédéterminée pour que le clapet s'ouvre et, dès que cette pression est atteinte, la pression dans le circuit est celle fournie par l'accumulateur et le vérin. Cependant, il s'avère que dès que le clapet de surpression s'ouvre la pression tombe et le clapet se referme bloquant ainsi le corps dans une position intermédiaire, même si l'obstacle n'est pas complètement surmonté: le mouvement de basculement de la charrue est alors arrêté jusqu'à ce que l'effort remonte à une valeur suffisante pour provoquer la réouverture du clapet.

Pour pallier cet inconvénient, on a proposé, dans le brevet allemand DE-A 1 908 381 de disposer sur la conduite de mise en pression du cylindre un clapet tournant qui est commandé par une bielle reliée à l'age de la charrue: ainsi lorsque la charrue est déviée d'un certain angle, la pression régnant dans le vérin de rappel est annulée au moins partiellement jusqu'à ce que la charrue atteigne une position de déviation maximum pour laquelle le clapet tournant réinjecte du liquide sous pression dans le vérin. Cette disposition nécessite l'emploi de tringleries complexes et qui se dérèglent facilement.

La présente invention concerne un dispositif de sécurité du type oléo-pneumatique comportant deux circuits en parallèle: un premier circuit ou circuit d'ouverture muni d'une valve à ouverture tarée qui après ouverture est maintenue ouverte par la pression totale provenant à la fois du cylindre actionné par le corps de labour en mouvement et par celle de l'accumulateur chargé au préalable; un deuxième circuit ou circuit de fermeture comportant un clapet anti-retour n'autorisant la circulation du liquide qu'en direction du cylindre.

A titre d'exemple non limitatif et pour faciliter la compréhension de l'invention, on a représenté aux dessins annexés:

Fig. 1, une vue en élévation latérale d'une charrue munie d'un dispositif de sécurité selon l'invention;

fig. 2, une vue schématique du circuit hydraulique suivant coupe BB de la figure 3;

Fig. 3, une vue schématique de la valve suivant coupe AA.

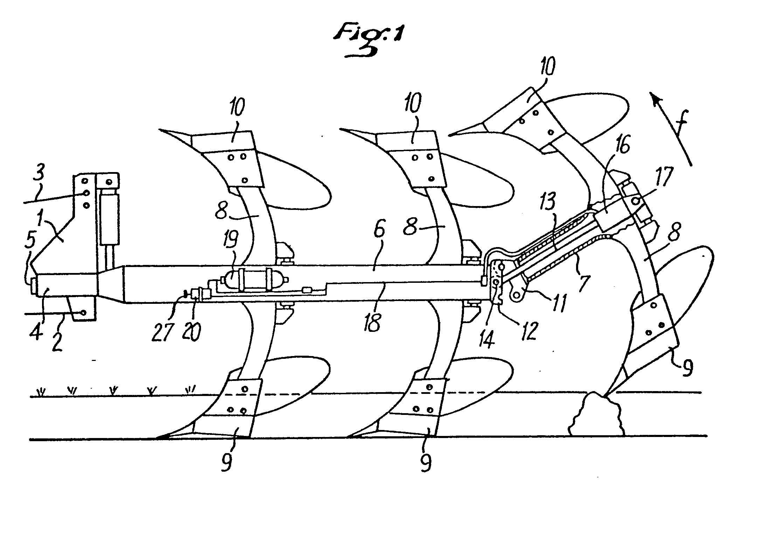

En se reportant à la figure 1, on voit que la charrue comporte, comme cela est connu, un avant-train 1 attelé à un tracteur par deux bielles inférieures 2 et une bielle supérieure 3; cet avant-train comporte une écamoussure 4 dans laquelle pivote un axe 5 solidaire d'une poutre 6 qui porte une pluralité de timons en T, dont la branche principale 7 est horizontale et porte une deuxième branche 8 dont chaque bras porte à son extrémité un corps de labour 9 et 10 symétrique, le corps 9 ayant un versoir versant à droite et le corps 10 un versoir versant à gauche.

La branche principale 7 de chaque timon en T comporte un plateau 11 qui est en position normale, maintenu pressé contre un plateau 12 solidaire de la poutre 6 par un moyen élastique. Ce moyen élastique est constitué par une bielle de traction 13 articulée en 14 au plateau 12 et reliée à son autre extrémité au piston 15 d'un vérin 16 lui-même relié à la branche 8 du timon en T par un axe 17. La chambre intérieure du vérin 16 est reliée par une canalisation 18 à une valve 20.

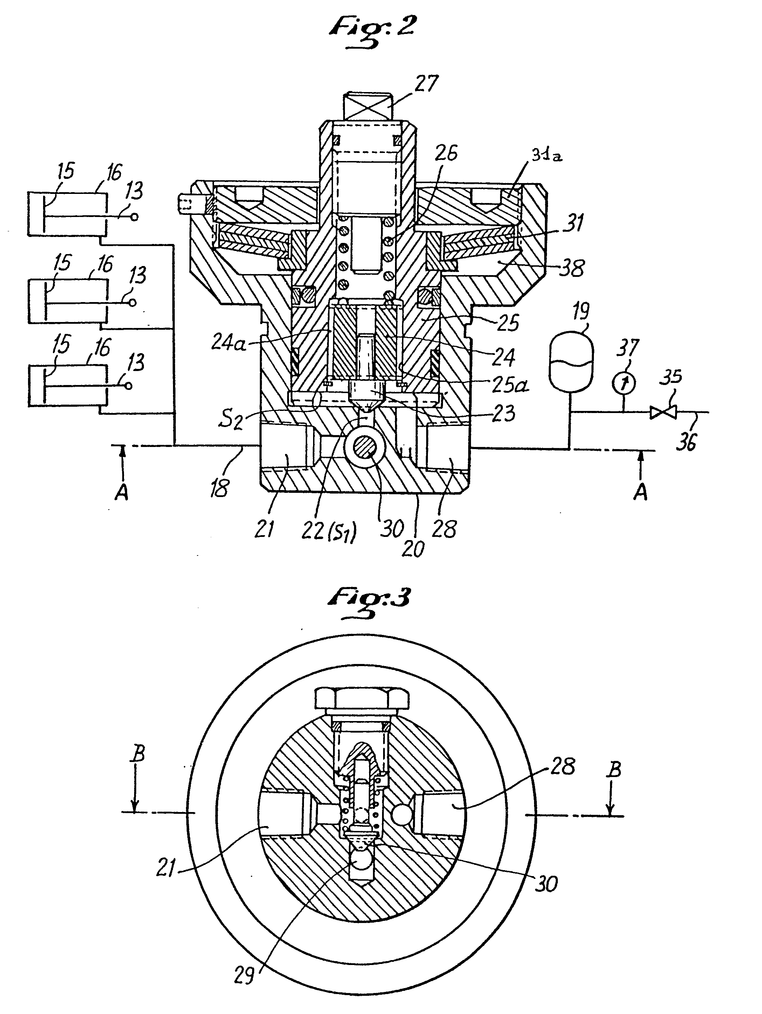

Comme cela est représenté à la figure 2, les trois vérins 16 des trois timons en T sont reliés en parallèle à la même canalisation 18.

La valve 20 comporte un orifice d'entrée 21, communiquant avec un petit orifice 22, de surface S1. Cet orifice 22 est obturé par un clapet 23 solidaire d'un piston 24 se déplaçant dans un alésage 25a d'un deuxième piston concentrique 25, en étant contretenu par un ressort 16 dont le tarage initial peut être réglé par une vis 27.

La surface S2 du piston 25 est nettement plus grande que la surface S1 de l'orifice 22. La surface S2 communique par un orifice de sortie 28 avec l'accumulateur 19 qui est mis en pression au préalable, au moyen du circuit hydraulique du tracteur, à une pression de l'ordre de 120 bars par exemple. La surface S2 communique également par un orifice 29 avec un clapet anti-retour 30 qui n'autorise la circulation du fluide qu'en provenance de l'accumulateur 19 vers les vérins 16.

Le piston 25 qui porte le piston 24, son ressort 26 et le moyen de réglage 27 dudit ressort 26 est lui-même contretenu par un ressort 31 dont le tarage peut également être réglé par le bouchon fileté 31a.

Le fonctionnement du dispositif ainsi décrit est expliqué ci-après:

Quand un corps de labour 9 heurte un rocher enterré comme cela est représenté figure 1, le timon en T 7-8 tend à pivoter dans le sens de la flèche f et la bielle 13 exerce une traction sur le piston 15, ce qui fait augmenter la pression dans la canalisation 18.

Cette pression agit sur la surface S1 du clapet 23 qui est maintenu en position par le ressort 26. Quand cette pression atteint une valeur maximale, déterminée par le ressort 26 et la surface S1, elle soulève le clapet 23. Il y a donc immédiatement mise en communication de la pression en provenance du cylindre 16 et de la pression en provenance de l'accumulateur 19: la pression totale résultante agit sur la surface S2 et repousse le piston 25 en comprimant le ressort 31.

Le piston 24 comporte des rainures longitudinales 24a de telle sorte que la pression soit égale sur les deux surfaces extrêmes du piston 24: celui-ci est donc équilibré.

Tant que la pression appliquée à la surface S2 est supérieure au tarage réglable du ressort 31, les pistons 24 et 25 demeurent repoussés.

Dès que l'obstacle est passé, la pression baisse dans le cylindre 16, donc dans la canalisation 18; le piston 24, repoussé par le ressort 26, vient alors en appui contre sa butée de fin de course de sorte que le clapet 23 est en position de sortie maximum hors du piston 25, mais celui-ci étant complètement reculé le clapet 23 ne vient pas tout de suite sur son siège. Cependant, au fur et à mesure que la pression baisse le piston 25 redescend sous l'action du ressort 31, le clapet 23 descend jusqu'à venir obturer la canalisation 22, le ressort 26 se recomprimant un peu pendant la fin de la course du piston 24; le clapet 30 s'ouvre car la contrepression fournie par l'accumulateur passe par l'orifice 29, jusque vers le cylindre 16, ce qui ramène le timon en T en position d'origine. Lorsque cette position est atteinte, le clapet 30 se referme et comme le clapet 23 est également fermé, les pièces sont maintenues par verrouillage hydraulique.

On obtient ainsi un mécanisme qui est maintenu en position de travail par verrouillage hydraulique, qui se déclenche pour une valeur de seuil qui peut être très élevée: en effet, l'accumulateur ne peut être mis en pression que par le circuit hydraulique du tracteur, soit au maximum 120 à 130 bars, alors que l'on peut tarer le clapet 23 à un niveau deux à trois fois supérieur et obtenir ainsi un taux de déclenchement très élevé pour un taux de réenclenchement correspondant à la pression normale dans l'accumulateur. L'effort sur la pointe du corps de labour tombe immédiatement à une valeur très inférieure dès que le mouvement de basculement est commencé, mais la force de rappel est suffisante pour ramener les pièces à leur position d'origine une fois l'obstacle passé.

D'autres aménagements peuvent être apportés: en particulier, on peut ajouter un accumulateur oléopneumatique auxiliaire relié à la chambre 38 de la valve 20. Celui-ci peut s'ajouter ou se substituer au ressort 31.

**Revendications**

1. Dispositif hydraulique de sécurité du type dit non-stop dans lequel les deux corps de labour symétriques (9, 10) sont portés par un timon en T (7, 8) comportant un plateau (11) maintenu pressé contre un autre plateau (12) par un moyen élastique constitué par une bielle de traction (13) agissant sur le piston (15) d'un cylindre simple effet (16) relié à un accumulateur oléo-pneumatique (19) caractérisé en ce que le cylindre simple effet est relié à l'accumulateur oléo-pneumatique (19) par un circuit hydraulique qui se divise en deux circuits en parallele, l'un d'ouverture et l'autre de fermeture, et en ce que dans le circuit d'ouverture est incorporée une valve (20) qui comporte un clapet de surpression (23) contretenu par un ressort réglable (26) de façon à ne s'ouvrir que pour une valeur déterminée de la pression hydraulique, ladite valve à ouverture tarée (20) étant après ouverture maintenue ouverte grâce à l'augmentation de pression dans le cylindre (16) qui s'ajoute alors à la pression de l'accumulateur (19), la pression résultante agissant sur un organe (25) de la valve (20) lui-même contretenu par un moyen élastique (31) pour maintenir en position ouverte le clapet de surpression (23) tant que la pression résultante est supérieure à la force exercée par le moyen élastique (31) de l'organe (25) de maintien, le circuit de fermeture comportant un clapet anti-retour (30) n'autorisant le flux du liquide que de l'accumulateur (19) vers le cylindre (16).

2. Dispositif hydraulique selon la revendication 1, caractérisé par le fait que le clapet (23) obture un orifice (22) de faible section (S1), ledit clapet étant monté concentrique et coulissant avec rainures longitudinales dans un piston (25) de plus grande section (S2) contretenu par un ressort (31) dont le tarage est réglable.

3. Dispositif selon l'une quelconque des revendications précédentes, dans lequel la chambre (38) de la valve (20) est reliée à un accumulateur auxiliaire dont l'action s'ajoute ou se substitue à celle du ressort (31) contretenant le piston (25) de la valve d'ouverture (20).

## Patentansprüche

1. Hydraulische Sicherheitsvorrichtung des sogenannten Nonstop-Typs, bei der die beiden symmetrischen Pflugkörper (9,10) von einem T-förmigen Pflugbaum (7, 8) getragen werden, der eine Platte (11) umfasst, die durch ein elastisches Mittel gegen eine andere Platte (12) angepresst wird, wobei dieses Mittel durch eine Zugstange (13) gebildet wird, welche auf den Kolben (15) eines einstufigen Zylinders (16) wirkt, der mit einem ölpneumatischen Speicher (19) verbunden ist, dadurch gekennzeichnet, dass der einstufige Zylinder mit dem ölpneumatischen Speicher (19) über einen hydraulischen Kreislauf verbunden ist, der sich in zwei parallele Kreisläufe, nämlich einen Öffnungs- und einen Schliesskreislauf aufteilt, und dass in dem Öffnungskreislauf ein Ventil (20) vorgesehen ist, das ein Überdruckventilglied (23) umfasst, welches von einer einstellbaren Feder (26) derart vorgespannt wird, dass es sich nur bei einem bestimmten Wert des hydraulischen Druckes öffnet, wobei das Ventil (20) mit definiertem Öffnungsverhalten nach dem Öffnen durch die Druckzunahme in dem Zylinder (16), die sich zu dem Druck des Speichers (19) addiert, in geöffneter Stellung gehalten wird, wobei der resultierende Druck auf ein Organ (25) des Ventils (20) wirkt, das durch ein elastisches Mittel (31) vorgespannt wird, um das Überdruckventilglied (23) in geöffneter Stellung zu halten, solange der resultierende Druck grösser ist als die von dem elastischen Mittel (31) des Halteorgans (25) ausgeübte Kraft, wobei der Verschlusskreislauf ein Rückschlagventil (30) umfasst, das den Flüssigkeitsfluss nur von dem Speicher (19) zu dem Zylinder (16) hin ermöglicht.

2. Hydraulische Vorrichtung nach Anspruch 1, dadurch gekennzeichnet, dass das Ventilglied (23) eine Öffnung (22) mit geringem Querschnitt (S1) verschliesst, wobei das Ventilglied konzentrisch und mit Längsrillen gleitend in einem Kolben (25) mit grösserem Querschnitt (S2) angebracht ist, welcher von einer Feder (31) vorgespannt ist, deren Kraft einstellbar ist.

3. Vorrichtung nach einem der vorhergehenden Ansprüche, bei der die Kammer (38) des Ventils (20) mit einem zusätzlichen Speicher verbunden ist, dessen Wirkung jene der Feder (31) unterstützt oder ersetzt, die den Kolben (25) des Öffnungsventils (20) vorspannt.

## Claims

1. A hydraulic safety device of the type known as non-stop in which the two symmetrical plowing bodies (9,10) are carried by a T-shaped beam (7, 8) comprising a plate (11) maintained pressed against another plate (12) by a resilient means formed of a traction rod (13) acting upon the piston (15) of a single-action cylinder (16) connected to an oleo-pneumatic accumulator (19), characterized in that the single-action cylinder is connected to the oleo-pneumatic accumulator (19) through a hydraulic circuit which branches out into two parallel circuits, one for opening and the other for closing, and in that there is incorporated in the opening circuit a valve (20) which comprises an overpressure release valve (23) biased by an adjustable spring (26) so that it will open only for a determined value of hydraulic pressure, said valve (20), the opening of which is bias-controlled, being kept open after ist opening by means of the pressure increase in cylinder (16) which then becomes added to the pressure from the accumulator (19), the resultant pressure acting upon a member (25) of valve (20), said member being biased by a resilient means (31) for keeping open the overpressure release valve (23) as long as the resultant pressure exceeds the force exerted by the resilient means (31) of the retaining member (25), the closing circuit comprising a check valve (30) allowing liquid flow to take place only from the accumulator (19) towards the cylinder (16).

2. A hydraulic device according to claim 1, characterized in that the release valve (23) closes an orifice (22) having a small cross-section (S1) said valve (23) being mounted concentrically and sliding along longitudinal grooves inside a piston (25) having a larger cross-section (S2) biased by a spring (31), the biasing force of which is adjustable.

3. A device according to either of the above claims, in which the chamber (38) of valve (20) is connected to an auxiliary accumulator, the action of which is added to or substituted for the action of spring (31) biasing the piston (25) of the opening valve (20).

Fig.1

0 109 882

Fig. 2

Fig. 3

9